# EUROPÄISCHE PATENTSCHRIFT

(11) **EP 4 305 498 B1**
(45) Veröffentlichungstag und Bekanntmachung des Hinweises auf die Patenterteilung: **03.12.2025**
(21) Anmeldenummer: 22711468.3
(22) Anmeldetag: 09.03.2022
(51) Int. Cl.: G05B 19/418

(54) **VERFAHREN ZUR ERZEUGUNG EINER VIRTUELLEN GEOMETRIE UND SYSTEM DAZU**
METHOD FOR GENERATING A VIRTUAL GEOMETRY, AND SYSTEM FOR DATA PROCESSING
PROCÉDÉ DE GÉNÉRATION D'UNE GÉOMÉTRIE VIRTUELLE ET SYSTÈME DE TRAITEMENT DE DONNÉES

(30) Priorität: 12.03.2021 DE 102021106116
(43) Veröffentlichungstag der Anmeldung: 17.01.2024
(73) Patentinhaber: Fraunhofer-Gesellschaft zur Förderung der angewandten Forschung e.V., 80686 München (DE)
(72) Erfinder: GANSER, Philipp, 52074 Aachen (DE); GERRETZ, Vincent, 52074 Aachen (DE); VENEK, Tommy, 52074 Aachen (DE)
(74) Vertreter: Heeschen Pültz Patentanwälte PartGmbB
(86) Internationale Anmeldenummer: PCT/DE2022/100193
(87) Internationale Veröffentlichungsnummer: WO 2022/188928

(56) Entgegenhaltungen:
- WO-A1-2016/065492
- US-A1- 2017 308 057

## Beschreibung

Die Erfindung betrifft ein Verfahren, insbesondere ein computerimplementiertes Verfahren, zur Erzeugung einer virtuellen Geometrie, ein Verfahren zur Erzeugung eines digitalen Zwillings sowie ein System zur Datenverarbeitung und ein Computerprogramm.

Verfahren zur Erzeugung einer virtuellen Geometrie eines mit einer Bearbeitungsmaschine hergestellten Bauteils mit einer Sollgeometrie sind grundsätzlich bekannt. Diese Verfahren basieren in der Regel auf Messverfahren, mit denen das hergestellte Bauteil gemessen wird.

Die Herstellung von Bauteilen mit Bearbeitungsmaschinen unterliegt in der Regel Qualitätsschwankungen aufgrund von Fehlereinflüssen auf den Herstellungsprozess. Die auftretenden Fehler werden in systematische Fehler und zufällige Fehler unterteilt. Systematische Fehler sind systembedingt und unter gleichen Randbedingungen reproduzierbar. Ein systematischer Fehler kann beispielsweise ein Werkzeugverschleiß des eingesetzten Bearbeitungswerkzeugs oder eine thermisch bedingte Ausdehnung von Komponenten der eingesetzten Bearbeitungsmaschine sein. Verbleibende Fehler, deren Ursprung kein systematischer Fehler ist, sind den zufälligen Fehlern zuzuordnen. Derartige Fehler sind in der Regel nicht deterministisch prognostizierbar. Zufällige Fehler können beispielsweise durch von einer Vorgabe abweichende Werkstoffeigenschaften oder durch sich ändernde Umgebungstemperaturen verursacht werden.

Um die Vielzahl an Einflussfaktoren auf den Fertigungsprozess zu berücksichtigen, wird zur Sicherstellung der Bauteilqualität eine Qualitätssicherung durchgeführt.

Bei der Qualitätssicherung wird das hergestellte Bauteil mit vorbestimmten Messmitteln gemessen. Zusätzlich besteht die Möglichkeit, das Bauteil zwischen zwei Fertigungsschritten zu messen.

im Rahmen der Qualitätssicherung werden beispielsweise Maß-, Form- und Lagetoleranzen geprüft. Geometrieabweichungen des Bauteils können zum Beispiel mit der taktilen Koordinaternmesstechnik oder mit der optischen Streifenlichtprojektion erfasst werden. Insbesondere bei komplexen Bauteilgeometrien, die beispielsweise Freiformflächen umfassen, sind die zur Verfügung stehenden Messverfahren zeit- und kostenintensiv. Bei Bauteilen mit komplexen Bauteilgeometrien kann die nachgelagerte Qualitätssicherung bis zu 25 % der Bauteilkosten verursachen.

Ferner sind die Investitionskosten für Messmittel hoch. Des Weiteren sind Messmittel regelmäßig zu warten und zu prüfen, um deren Funktionalität zu gewährleisten.

Die WO2016/065492 beschreibt ein computerimplementiertes Verfahren zur Teilanalytik eines Werkstücks, das von mindestens einer NC-Maschine bearbeitet wurde, wobei im Wesentlichen die Simulation des Bearbeitungsprozesses erfolgt und insbesondere kein Messverfahren ersetzt wird. Insbesondere sind nach der Herstellung des Bauteils weitere Messschritte erforderlich, um die Qualität des Bauteils zu bestimmen. Beispielsweise werden hier keine technologischen Effekte und deren Wechselwirkungen modelliert, sodass das ermittelte Ergebnis ungenau ist.

Die US 2017/0308057 A1 zeigt ein computerimplementiertes Verfahren zum Analysieren eines von einer CNC-Maschine bearbeiteten Werkstücks mit dem Ziel, nach der Bearbeitung Informationen über die Qualität des Werkstücks bereitzustellen. Hierbei wird von einem digitalen Maschinenmodell mittels Simulation auf das Bauteil geschlossen.

Es ist daher eine Aufgabe der vorliegenden Erfindung, ein Verfahren, insbesondere ein computerimplementiertes Verfahren, zur Erzeugung einer virtuellen Geometrie eines mit einer Bearbeitungsmaschine hergestellten und/oder herzustellenden Bauteils mit einer Sollgeometrie, ein Verfahren zur Erzeugung eines digitalen Zwillings, ein System zur Datenverarbeitung und ein Computerprogramm bereitzustellen, die einen oder mehrere der genannten Nachteile vermindern oder beseitigen. Insbesondere ist es eine Aufgabe der Erfindung, eine Lösung bereitzustellen, die den Messaufwand im Rahmen der Qualitätssicherung vermindert oder beseitigt.

Diese Aufgabe wird gelöst mit einem Verfahren, einem System zur Datenverarbeitung und einem Computerprogramm nach den Merkmalen der unabhängigen Patentansprüche. Weitere vorteilhafte Ausgestaltungen des Verfahrens, des Systems zur Datenverarbeitung und des Computerprogramms sind in den jeweiligen abhängigen Patentansprüchen angegeben. Die in den Patentansprüchen einzeln aufgeführten Merkmale sind in beliebiger, technologisch sinnvoller Weise miteinander kombinierbar und können durch weitere Merkmale aus der Beschreibung ergänzt werden, wobei weitere Ausführungsvarianten der Erfindung aufgezeigt werden.

Das Verfahren zur Erzeugung einer virtuellen Geometrie eines mit einer Bearbeitungsmaschine hergestellten und/oder herzustellenden Bauteils mit einer Sollgeometrie, umfasst die Schritte: Erfassung von Maschineninformationen, die mindestens einen eine Geometrie des Bauteils beeinflussenden Maschinenparameter der Bearbeitungsmaschine charakterisieren, Ermitteln mindestens eines Bauteilfaktors, basierend auf den Maschineninformationen und der Sollgeometrie, und Erzeugen einer ersten virtuellen Geometrie als digitales geometrisches Abbild des hergestellten und/oder herzustellenden Bauteils basierend auf dem Bauteilfaktor.

Das Verfahren ist insbesondere ein computerimplementiertes Verfahren. Das Verfahren ist zur Erzeugung einer virtuellen Geometrie ausgebildet. Unter einer virtuellen Geometrie wird insbesondere ein geometrisches Abbild eines hergestellten und/oder herzustellenden Bauteils verstanden. Die virtuelle Geometrie eines hergestellten Bauteils kann vergleichbar mit einem Messergebnis eines dreidimensionalen Messverfahrens sein. Die virtuelle Geometrie ist beispielsweise eine Punktewolke, deren Oberfläche ein Abbild des hergestellten Bauteils ist. Ferner kann die virtuelle Geometrie ein Polygonnetz, Non-Uniform Rational B-Splines, ein Begrenzungsflächenmodell, eine konstruktive Festkörpergeometrie, ein Dexel, ein Multi-Dexel, ein Voxel und/oder ein Octree sein oder umfassen. Eine virtuelle Geometrie eines herzustellenden Bauteils kann auch als Prognosegeometrie verstanden werden. In diesem Fall wird eine virtuelle Geometrie eines herzustellenden Bauteils erzeugt.

Unter einer Geometrie wird beispielsweise eine Makrogeometrie des Bauteils verstanden. Die Makrogeometrie beschreibt unter anderem die Form und die Maße eines Bauteils. Darüber hinaus wird unter einer Geometrie auch eine Mikrogeometrie verstanden. Die Mikrogeometrie beschreibt unter anderem eine Oberflächentopografie und/oder eine Oberflächengüte. Vorzugsweise wird unter einer Geometrie eine messbare Eigenschaft eines Bauteils verstanden.

Das Bauteil wird mit einer Bearbeitungsmaschine hergestellt oder ist mit einer Bearbeitungsmaschine herzustellen. Die Bearbeitungsmaschine kann beispielsweise eine Fräsmaschine oder eine Drehmaschine sein. Darüber hinaus kann die Bearbeitungsmaschine jegliche Maschine zur Ausführung eines Fertigungsverfahrens sein.

Das hergestellte und/oder herzustellende Bauteil weist eine Sollgeometrie auf. Die Sollgeometrie ist insbesondere die Geometrie, die für das hergestellte und/oder herzustellende Bauteil vorgesehen bzw. vordefiniert wurde. Die Sollgeometrie des Bauteils wird üblicherweise in der Konstruktion festgelegt. Die Sollgeometrie kann beispielsweise die Form und die Maße des herzustellenden Bauteils und/oder weitere Parameter, beispielsweise eine Oberflächengüte oder eine Oberflächentopografie, definieren.

In einem ersten Schritt werden die Maschineninformationen erfasst. Unter Maschineninformationen können auch Maschinendaten verstanden werden. Unter der Erfassung von Maschineninformationen ist grundsätzlich jedes Verfahren zum Erfassen, Sammeln, Auslesen, Erhalten und ähnliches von Maschineninformationen zu verstehen. Die Maschineninformationen charakterisieren mindestens einen die Geometrie des Bauteils bei der Herstellung beeinflussenden Maschinenparameter der Bearbeitungsmaschine. Der Maschinenparameter kann beispielsweise eine, zwei oder mehrere Achspositionen oder ein, zwei oder mehrere Leistungswerte sein, wie im Folgenden näher erläutert wird.

Das Erfassen von Maschineninformationen kann beispielsweise mittels Sensoren erfolgen. Unter Erfassen von Maschineninformationen ist darüber hinaus das Sammeln von Informationen beziehungsweise Daten zu verstehen. Beispielsweise können die Maschineninformationen derart erfasst werden, dass eine Maschinensteuerung der Bearbeitungsmaschine ausgelesen wird, und auf diesem Wege die Maschineninformationen erfasst werden. Alternativ oder zusätzlich können die Maschineninformationen aus weiteren Datenspeichern und/oder Datenquellen ausgelesen werden. Darüber hinaus kann das Erfassen von Maschineninformationen auch kalkulatorisch erfolgen, insbesondere, indem die Maschineninformationen mittels eines Modells berechnet werden.

Ferner umfasst das Verfahren das Ermitteln mindestens eines Bauteilfaktors, basierend auf den Maschineninformationen und der Sollgeometrie. Der Bauteilfaktor ergibt sich aus den Maschineninformationen und der Sollgeometrie, Der Bauteilfaktor berücksichtigt somit die Maschineninformationen und die Sollgeometrie und ist insbesondere derart ausgebildet, um mit diesem die erste virtuelle Geometrie zu erzeugen.

Der Erfindung liegt die Erkenntnis zugrunde, dass die Geometrie eines hergestellten Bauteils nicht nur anhand eines Messverfahrens am Bauteil selbst, sondern auch auf Basis von Maschineninformationen ermittelbar ist. Die Erfinder haben herausgefunden, dass durch eine geschickte Verknüpfung von Maschineninformationen und der dem Bauteil zugrundeliegenden Sollgeometrie auf die tatsächliche beziehungsweise virtuelle Geometrie des Bauteils geschlossen werden kann.

Da die Maschineninformationen bei modernen Bearbeitungsmaschinen üblicherweise ohnehin zur Verfügung stehen und die Sollgeometrie des herzustellenden Bauteils aufgrund der CAD-Konstruktionen zur Verfügung steht, ermöglicht das Verfahren eine in-situ Ermittlung der Bauteilgeometrie, sodass ein anschließender Prüfschritt mit einem Messmittel beziehungsweise einem Messverfahren nicht erforderlich ist. Infolgedessen werden die Kosten für anschließende Prüfungen reduziert oder vermieden, sodass die im Vorherigen genannten 25 % der Bauteilkosten für die Qualitätssicherung im Wesentlichen beseitigt werden. Darüber hinaus kann eine 100 %-Kontrolle aller Bauteile erfolgen, sodass von den fehleranfälligen Stichproben, die in modernen Messverfahren üblich sind, Abstand genommen werden kann. Darüber hinaus kann basierend auf der ersten virtuellen Geometrie und der im Folgenden noch näher erläuterten zweiten virtuellen Geometrie eine statistische Prozessregelung erfolgen oder diese unterstützt werden. Beispielsweise kann eine Prozessregelung zwischen der Ziehung von zwei Stichproben basierend auf der ersten virtuellen Geometrie erfolgen, da eine höhere Datenverfügbarkeit durch das Verfahren besteht.

Basierend auf dem Bauteilfaktor, wird anschließend die erste virtuelle Geometrie als digitales geometrisches Abbild des hergestellten und/oder herzustellenden Bauteils erzeugt. Beispielsweise kann das Erzeugen der ersten virtuellen Geometrie derart erfolgen, dass auf Basis der Sollgeometrie an vordefinierten Punkten der Sollgeometrie eine Abweichung mittels des Bauteilfaktors ermittelt wird,

Die Erfinder haben auf experimentellem Wege das im Vorherigen beschriebene Verfahren verifiziert. Es hat sich gezeigt, dass die erste virtuelle Geometrie im Wesentlichen mit der Geometrie übereinstimmt, die mit komplexen dreidimensionalen Messverfahren erzeugt wurde. Teilweise hat sich gezeigt, dass das im Vorherigen beschriebene Verfahren ein realitätsnäheres Ergebnis ergab.

Eine bevorzugte Ausführungsvariante des Verfahrens zeichnet sich dadurch aus, dass die Maschineninformationen Achspositionen mindestens einer Maschinenachse und/oder einer Maschinenspindel der Bearbeitungsmaschine charakterisieren. Vorzugsweise charakterisieren die Maschineninformationen Achspositionen von zwei oder mehr oder allen Maschinenachsen. Achspositionen einer Maschinenachse können in der Regel aus einer Maschinensteuerung der Bearbeitungsmaschine ausgelesen werden,

Die Maschinenachsen können beispielsweise die Achsen eines Maschinentisches, einer Baukammer einer additiven Fertigungsmaschine und/oder eines Laserscanners sein. Die Maschinenspindel kann beispielsweise eine Werkzeugspindel einer Fräsmaschine oder eine Drehmaschinenspindel zum rotatorischen Antreiben eines Bauteils sein.

Eine Achsposition ist vorzugsweise definiert als eine Beabstandung eines vordefinierten Punktes einer Maschinenkomponente zu einem vordefinierten Nullpunkt, insbesondere zu einer bestimmten Zeit. Vorzugsweise umfasst das Verfahren den Schritt: Erfassen von Achspositionen mindestens einer Maschinenachse, vorzugsweise von zwei oder mehr oder allen Maschinenachsen. Dieses Erfassen kann auch ein Auslesen einer Maschinensteuerung der Bearbeitungsmaschine sein. Die Achspositionen sind insbesondere als Funktion der Zeit angegeben oder mit einer Zeiteinheit verknüpft. Auf Grundlage dessen können durch Differenzierungen zusätzlich Geschwindigkeiten, Beschleunigungen und Rücke ermittelt werden.

In einer weiteren bevorzugten Ausführungsvariante des Verfahrens ist vorgesehen, dass die Maschineninformationen Leistungswerte der mindestens einen Maschinenachse, vorzugsweise der zwei oder mehr oder von allen Maschinenachsen, und/oder der Maschinenspindel der Bearbeitungsmaschine charakterisieren. Die Leistungswerte können beispielsweise unmittelbar in Watt oder Kilowatt angegeben werden. Darüber hinaus können die Leistungswerte mittelbar angegeben werden, beispielsweise in Ampere oder Prozent. Die Leistungswerte sind insbesondere als Funktion der Zeit angegeben oder mit einer Zeiteinheit verknüpft. Die Leistungswerte sind insbesondere Leistungswerte eines Antriebs der Maschinenachse.

In einer weiteren bevorzugten Ausführungsvariante des Verfahrens ist vorgesehen, dass eine Ausgangsgeometrie des zu bearbeitenden Werkstücks berücksichtigt wird.

Es ist bevorzugt, dass das Verfahren den Schritt umfasst: Erfassen von Leistungswerten der mindestens einen Maschinenachse, vorzugsweise der zwei oder mehr oder von allen Maschinenachsen, und/oder der Maschinenspindel der Bearbeitungsmaschine. Das Erfassen kann auch ein Auslesen der Maschinensteuerung und/oder eine Berechnung der Leistungswerte sein.

Im Folgenden werden Achspositionen und Informationen charakterisierend Achspositionen sowie Leistungswerte und Informationen charakterisierend Leistungswerte teilweise synonym verwendet, Darüber hinaus ist es bevorzugt, dass die Leistungswerte und die Achspositionen miteinander in Relation gesetzt werden. Eine Relation kann beispielsweise mittels einer zeitlichen Variablen und/oder einer zeitlichen Verknüpfung erfolgen.

Eine bevorzugte Fortbildung des Verfahrens umfasst die Schritte: Ermitteln einer Prozesskraft, insbesondere von Prozesskräften, mittels der Leistungswerte und eines Kontaktbereichs zwischen einem eingesetzten Werkzeug und dem Bauteil, und Ermitteln eines Verlagerungsfaktors, der mittels einer Werkzeugverlagerung und/oder einer Bauteilverlagerung auf Grundlage der Prozesskraft ermittelt wird, wobei der Bauteilfaktor basierend auf dem Verlagerungsfaktor ermittelt wird.

Wobei der Bauteilfaktor basierend auf dem Verlagerungsfaktor ermittelt wird, bedeutet insbesondere, dass der Bauteilfaktor unter anderem basierend auf dem Verlagerungsfaktor ermittelt wird.

Es ist insbesondere bevorzugt, dass Prozesskräfte ermittelt werden. Die Prozesskräfte sind in der Fertigungstechnik allgemein bekannt als Kräfte, die auf das Bauteil und/ oder auf das Werkzeug und/oder zwischen Werkzeug und Bauteil wirken und/oder über ein Medium zwischen Werkzeug und Bauteil übertragen werden. Ferner sind Prozesskräfte definiert als aus dem Fertigungsprozess resultierende Kräfte, die das Prozessergebnis beeinflussen. Eine einzelne Prozesskraft der Prozesskräfte wird vorzugsweise als Kraftvektor ermittelt, nämlich in drei Raumrichtungen, insbesondere in Richtung der Maschinenachsen X, Y und Z. Die Prozesskraft wird unter anderem in Abhängigkeit der Werkzeugposition ermittelt.

Der Kontaktbereich zwischen dem eingesetzten Werkzeug und dem Bauteil ist in der Fertigungstechnik allgemein als die Kontaktgeometrie bekannt. Der Kontaktbereich wird in der Praxis analytisch und/oder diskret ermittelt. Der Kontaktbereich wird im Wesentlichen durch die zu bearbeitende Bauteilgeometrie, die Werkzeuggeometrie sowie deren Lage und Orientierung zueinander bestimmt. Der Kontaktbereich kann beispielsweise als ein Linienkontakt oder als ein Flächenkontakt ausgebildet sein. Der Kontaktbereich wird in der Praxis analytisch und/oder diskret ermittelt. Der Kontaktbereich wird im Wesentlichen durch die zu bearbeitende Bauteilgeometrie, die Werkzeuggeometrie und die Eingriffsbedingungen, beispielsweise ein Werkzeugwinkel zwischen dem Werkzeug und dem Bauteil, definiert.

Das eingesetzte Werkzeug kann beispielsweise ein Werkzeug zur spanenden Bearbeitung oder ein Laserstrahl sein. Darüber hinaus kann das Werkzeug jegliches ein Werkstück in einem Fertigungsprozess beeinflussendes Element sein.

Die Erfinder haben herausgefunden, dass die Werkzeugverlagerung und/oder die Bauteilverlagerung während des Herstellungsprozesses eines Bauteils häufig einen Einfluss auf die Abweichung der hergestellten Bauteilgeometrie von der Sollgeometrie hat. In Abhängigkeit des eingesetzten Werkzeuges und des hergestellten Bauteils ist die Werkzeugverlagerung oder die Bauteilverlagerung von größerer Relevanz.

Beispielsweise ist die Bauteilverlagerung bei einem filigranen Bauteil, beispielsweise einem dünnwandigen Bauteil, wie einem integralen axialen Verdichterlaufrad oder einer dünnwandigen Triebwerksschaufel, häufig relevanter als eine Werkzeugverlagerung, Im Gegensatz hierzu ist die Werkzeugverlagerung bei der Bearbeitung eines mehrere Tonnen schweren Tiefziehwerkzeuges von höherer Relevanz als die Bauteilverlagerung. Die Werkzeugverlagerung und die Bauteilverlagerung werden im Wesentlichen auf Grundlage der Prozesskraft ermittelt. Durch die zwischen dem Bauteil und dem Werkzeug wirkende Prozesskraft, erfolgt die Werkzeugverlagerung beziehungsweise Bauteilverlagerung. Die Werkzeug- und/oder Bauteilverlagerung kann beispielsweise auf Basis numerischer Näherungsversuche oder analytischer Modelle erfolgen, beispielsweise dem mechanischen Modell eines Biegebalkens. Die Werkzeug- und Bauteilverlagerung kann eine Verschiebung und/oder eine Verformung des Bauteils und/oder des Werkzeugs charakterisieren.

Darüber hinaus ist es bevorzugt, dass ein Spannmittelfaktor basierend auf einem eingesetzten Spannmittel zum Spannen des Bauteils und/oder des Werkzeugs und/oder Spannparametern ermittelt wird. Durch ein Spannmittel kann eine Verformung des Bauteils und/oder des Werkzeugs bewirkt werden. Ferner können die dynamischen und statischen Eigenschaften beeinflusst werden.

Auf Basis der Werkzeugverlagerung und/oder der Bauteilverlagerung wird der Verlagerungsfaktor ermittelt. Der Verlagerungsfaktor gibt insbesondere eine ortsaufgelöste Abweichung wieder, die berücksichtigt, dass sich das Bauteil und/oder ein bearbeitungsrelevanter Abschnitt des Werkzeugs nicht in der Position befinden, die in der Prozessplanung für das Bauteil und/oder das Werkzeug vorgesehen wurde. Beispielsweise durch ein Verschieben des Toolcenterpoints und/oder ein Verschieben des Bauteils bzw. eines Bauteilabschnitts wird eine von der Sollgeometrie abweichende Geometrie hergestellt. Darüber hinaus ist es bevorzugt, dass bei der Ermittlung des Verlagerungsfaktors der Spannmittelfaktor berücksichtigt wird.

Eine weitere bevorzugte Fortbildung des Verfahrens umfasst den Schritt: Ermitteln eines Positionsfaktors auf Basis der Achspositionen, und wobei der Bauteilfaktor basierend auf dem Positionsfaktor ermittelt wird. Der Positionsfaktor berücksichtigt, dass sich das Werkzeug als solches nicht in der Position befindet, die in der Prozessplanung für das Werkzeug vorgesehen wurde. Dies wird durch ortsaufgelöste Abweichungen der realen Achspositionen von den vorgegebenen Achspositionen bedingt. Diese Abweichungen können beispielsweise durch Beschleunigungen und Rücke bedingt werden, sodass die Maschine nicht die vordefinierten Punkte abfährt. Es ist insbesondere bevorzugt, dass der Positionsfaktor unter anderem auf Basis des mit den Achspositionen ermittelten Kontaktbereichs ermittelt wird.

Ferner kann ein im NC-Programm abgebildeter NC-Pfad Abweichungen aufweisen, da das NC-Programm fehlerbehaftet sein kann. Beispielsweise können die Abweichungen durch Fehler und Ungenauigkeiten im CAM-Algorithmus und durch menschliche Fehler verursacht werden. Diese Abweichungen werden mit dem Verfahren präzise detektiert.

Darüber hinaus werden in einem NC-Programm die Punkte beabstandet zueinander definiert, und zwischen den Punkten erfolgt eine Interpolation für die Maschinenführung. Auch hieraus ergibt sich eine Abweichung. Es ist insbesondere bevorzugt, dass die erfassten Achspositionen unter Berücksichtigung der Sollgeometrie berücksichtigt werden, sodass keine Soll-Positionen der Bearbeitungsmaschine berücksichtigt werden müssen.

Wobei der Bauteilfaktor basierend auf dem Positionsfaktor ermittelt wird, bedeutet insbesondere, dass der Bauteilfaktor unter anderem basierend auf dem Positionsfaktor ermittelt wird.

Eine weitere bevorzugte Ausführungsvariante des Verfahrens umfasst den Schritt: Ermitteln eines Werkzeugfaktors auf Basis einer Werkzeuggeometrie, und wobei der Bauteilfaktor basierend auf dem Werkzeugfaktor ermittelt wird. Der Werkzeugfaktor berücksichtigt eine Abweichung, die dadurch entsteht, dass das Werkzeug nicht die Geometrie aufweist, die in der Prozessplanung für das Werkzeug vorgesehen wurde.

Wobei der Bauteilfaktor basierend auf dem Werkzeugfaktor ermittelt wird, bedeutet insbesondere, dass der Bauteilfaktor unter anderem basierend auf dem Werkzeugfaktor ermittelt wird.

Vorzugsweise wird die Werkzeuggeometrie auf Basis eines Ausgangszustands und/oder auf Basis eines Werkzeugverschleißes ermittelt. Der Ausgangszustand beschreibt die Geometrie des Werkzeugs vor dem ersten Einsatz. Insbesondere berücksichtigt der Ausgangszustand eine Abweichung des Ausgangszustands von einer vorgegebenen Sollgeometrie des Werkzeugs, wobei diese Abweichung beispielsweise durch eine unpräzise Herstellung des Werkzeugs bedingt ist. Die Werkzeuggeometrie beschreibt unter anderem Abmessungen, beispielsweise eine Werkzeuglänge oder einen Werkzeugdurchmesser, eine Form des Werkzeugs und/oder einen Werkzeugrundlauf. Während des Einsatzes des Werkzeuges erfolgt stets ein Werkzeugverschleiß, der in der Regel die Werkzeuggeometrie stetig verändert.

Die Bearbeitung eines Bauteils mit einem Werkzeug, das eine von einer Werkzeug-Soll-Geometrie abweichende Werkzeuggeometrie aufweist, führt zu einem hergestellten Bauteil, das von der Sollgeometrie abweicht. Es ist bevorzugt, dass der Werkzeugverschleiß basierend auf dem Kontaktbereich und/oder basierend auf der Prozesskraft ermittelt wird. Der Werkzeugverschleiß kann beispielsweise mittels einer empirischen Modellierung ermittelt werden, wobei der mit der Zeit veränderliche Kontaktbereich, Prozesskräfte und zusätzliche gekoppelte Sensorinformationen, beispielsweise von Kamerasystemen oder Lasermesssystemen, berücksichtigt werden.

Darüber hinaus kann sich das Werkzeug während der Bearbeitung verformen, beispielsweise in einem Bereich angrenzend an den Toolcenterpoint. Aufgrund dieser Verformung entsteht ebenfalls eine Abweichung, die mit dem Werkzeugfaktor berücksichtigt werden kann.

Eine weitere bevorzugte Ausführungsvariante des Verfahrens umfasst den Schritt: Erfassung von Metainformationen, wobei die Metainformationen Werkzeugparameter des Werkzeugs, eine Maschinenkinematik der Bearbeitungsmaschine und/oder Programmnamen repräsentieren, und wobei die Metainformationen zum Ermitteln des Verlagerungsfaktors und/oder zum Ermitteln des Kontaktbereichs verwendet werden.

Die Maschinenkinematik bewirkt einzelne Abweichungen, die sich zu einem Gesamtfehler überlagern, der volumetrischer Fehler genannt wird. Die Überlagerung aller systematischen Einzelfehler in Linear- und Rundachsen einer Bearbeitungsmaschine bewirkt an jeder Position des Arbeitsraumes einen ortsspezifischen Versatz des Werkzeugs gegenüber einer vordefinierten Position sowie eine ortspezifische Abweichung von einer vordefinierten Orientierung.

Metadaten sind zusätzliche strukturierte Daten, die weitere Informationen zum Bauteil, beispielsweise eine Identifikationskennung, einen Werkstoff oder eine Koordinatenverschiebung, zum Werkzeug, beispielsweise eine Identifikationskennung, einen Werkzeugtyp, einen Werkzeugradius, und zur Bearbeitungsmaschine, beispielsweise eine Identifikationskennung, eine Maschinenkinematik oder eine Maschinenkonfiguration, repräsentieren. Die Programmnamen ermöglichen eine Zuordnung von NC-Operationen zu einem Bauteil sowie eine Definition einer Bearbeitungsreihenfolge.

In einer weiteren bevorzugten Fortbildung ist vorgesehen, dass das Verfahren den Schritt umfasst: Erfassung von Sensorinformationen, wobei die Sensorinformationen Kraftwerte, Momentenwerte, insbesondere Biegemomentenwerte, Vibrationswerte und/oder Werkzeugverlagerungswerte charakterisieren und wobei die Sensorinformationen zum Ermitteln der Prozesskraft verwendet werden.

Die Kraftwerte können beispielsweise mittels sensorischer Werkzeughalter, spindelintegrierter Kraftmesssysteme und/oder werkstückseitiger Kraftmessplattformen ermittelt werden. Mit den Kraftwerten und/oder Momentenwerten können die Prozesskräfte ermittelt werden. Mit den Vibrationswerten kann die dynamische Nachgiebigkeit des Werkzeugs und/oder des Bauteils ermittelt werden. Ferner kann ein Werkzeugverschleiß und/oder ein Werkzeugrundlauf mittels Laser-Werkzeugmesssystemen oder Kamerasystemen ermittelt werden.

Die Sensorinformationen sind insbesondere Ausgangssignale von Sensoren, insbesondere Kraftsensoren, Vibrationssensoren und/oder Werkzeugverlagerungssensoren. Die Sensoren können beispielsweise diskrete Sensoren oder Zeitreihensensoren sein.

Ferner ist es bevorzugt, dass der Kontaktbereich basierend auf der Werkzeuggeometrie des Werkzeugs und der Sollgeometrie des Bauteils und/oder der ersten virtuellen Geometrie ermittelt wird. Ferner vorzugsweise werden eine Lage und Orientierung zwischen Werkzeug und Bauteil berücksichtigt. Die Ermittlung bzw. das Ermitteln des Kontaktbereichs, basierend auf der Werkzeuggeometrie und der ersten virtuellen Geometrie, ist insbesondere bei der Ermittlung der im Folgenden noch näher erläuterten zweiten virtuellen Geometrie von Bedeutung. Da der Kontaktbereich abhängig von der hergestellten bzw. herzustellenden Geometrie ist, weicht dieser tatsächlich von dem Kontaktbereich ab, der auf Grundlage der Sollgeometrie ermittelt wird. Um eine genauere virtuelle Geometrie zu ermitteln, kann daher der Kontaktbereich auf Basis der Werkzeuggeometrie und der ersten virtuellen Geometrie ermittelt werden.

Eine weitere bevorzugte Ausführungsvariante des Verfahrens umfasst die Schritte: Ermitteln eines modifizierten Bauteilfaktors, basierend auf den Maschineninformationen und der ersten virtuellen Geometrie, und Erzeugen einer zweiten virtuellen Geometrie, basierend auf dem modifizierten Bauteilfaktor. Die Ermittlung des Bauteilfaktors ist deswegen verbesserbar, da zwischen dem Verlagerungsfaktor, dem Positionsfaktor und dem Werkzeugfaktor Wechselwirkungen bestehen, die zu Abweichungen führen können. Beispielsweise führt die Abweichung der tatsächlich hergestellten Geometrie von der Sollgeometrie zu einem veränderten Kontaktbereich und einer veränderten Prozesskraft. Auch weitere Einflussfaktoren können durch die Abweichungen verändert werden.

Durch eine Berücksichtigung der ersten virtuellen Geometrie anstatt der Sollgeometrie wird eine präzisere Ermittlung des Bauteilfaktors ermöglicht. Insbesondere ist es bevorzugt, dass eine dritte und weitere virtuelle Geometrien ermittelt werden, bei denen jeweils die zuvor ermittelte virtuelle Geometrie als Ausgangsgeometrie berücksichtigt wird. Somit kann iterativ ein präziser modifizierter Bauteilfaktor ermittelt werden.

Es ist insbesondere bevorzugt, dass ein modifizierter Verlagerungsfaktor, ein modifizierter Positionsfaktor und/oder ein modifizierter Werkzeugfaktor auf Basis der ersten virtuellen Geometrie und/oder auf Basis einer Abweichung zwischen der ersten virtuellen Geometrie und der Sollgeometrie ermittelt wird.

Vorzugsweise wird eine modifizierte Prozesskraft auf Basis der Leistungswerte und eines modifizierten Kontaktbereichs ermittelt. Bei dem modifizierten Kontaktbereich wird insbesondere die erste virtuelle Geometrie berücksichtigt und vorzugsweise nicht die Sollgeometrie des Bauteils. Auf Basis der modifizierten Prozesskraft wird vorzugsweise eine modifizierte Werkzeugverlagerung und/oder eine modifizierte Bauteilverlagerung ermittelt.

Auf Grundlage der modifizierten Werkzeugverlagerung und/oder der modifizierten Bauteilverlagerung wird der modifizierte Verlagerungsfaktor ermittelt. Der modifizierte Bauteilfaktor basiert vorzugsweise auf dem modifizierten Verlagerungsfaktor. Auch der modifizierte Werkzeugfaktor weicht in der Regel von dem Werkzeugfaktor ab, da sich die Eingriffsbedingungen des Werkzeugs aufgrund der Abweichung der ersten virtuellen Geometrie zur Sollgeometrie verändern.

Eine weitere bevorzugte Fortbildung des Verfahrens umfasst den Schritt: Ermitteln einer Geometrieabweichung durch Abgleich der ersten virtuellen Geometrie und/oder der zweiten virtuellen Geometrie mit der Sollgeometrie, wobei vorzugsweise in vordefinierten Bauteilabschnitten der Sollgeometrie jeweils ein Abweichungsvektor gebildet wird.

Gemäß einem weiteren Aspekt wird die eingangs genannte Aufgabe gelöst durch ein Verfahren zur Erzeugung eines digitalen Zwillings eines hergestellten Bauteils, basierend auf Maschineninformationen und einer Sollgeometrie des Bauteils, insbesondere mittels eines Verfahrens nach einer der im Vorherigen beschriebenen Ausführungsvarianten.

Gemäß einem weiteren Aspekt wird die eingangs genannte Aufgabe gelöst durch ein System zur Datenverarbeitung, umfassend Mittel zur Ausführung der Schritte des Verfahrens nach einer der im Vorherigen beschriebenen Ausführungsvarianten.

Das System ist insbesondere zur Erzeugung einer virtuellen Geometrie eines mit einer Bearbeitungsmaschine hergestellten und/oder herzustellenden Bauteils mit einer Sollgeometrie ausgebildet. Das System zur Datenverarbeitung umfasst vorzugsweise Mittel zum Erfassen von Maschineninformationen, die mindestens einen eine Geometrie des Bauteils beeinflussenden Maschinenparameter der Bearbeitungsmaschine charakterisieren.

Ferner vorzugsweise umfasst das System zur Datenverarbeitung Mittel zum Ermitteln mindestens eines Bauteilfaktors basierend auf den Maschineninformationen und der Sollgeometrie. Darüber hinaus ist es bevorzugt, dass das System zur Datenverarbeitung Mittel zum Erzeugen einer ersten virtuellen Geometrie als digitales geometrisches Abbild des hergestellten und/oder herzustellenden Bauteils basierend auf dem Bauteilfaktor aufweist.

Das System weist vorzugsweise eine Schnittstelle auf, die zur Kopplung des Systems an ein externes System ausgebildet ist. Beispielsweise kann das System mittels der Schnittstelle mit einem CAQ-System einer Qualitätssicherung koppelbar sein.

Gemäß einem weiteren Aspekt wird die eingangs genannte Aufgabe gelöst durch ein Computerprogramm, umfassend Befehle, die bei der Ausführung des Computerprogramms durch einen Computer diesen veranlassen, das Verfahren nach einer der im Vorherigen beschriebenen Ausführungsvarianten auszuführen.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens zur Erzeugung einer virtuellen Geometrie eines mit einer Bearbeitungsmaschine hergestellten und/oder herzustellenden Bauteils mit einer Sollgeometrie verwiesen.

Bevorzugte Ausführungsbeispiele werden exemplarisch anhand der beiliegenden Figuren erläutert: Es zeigen:
- Figur 1:: eine schematische Darstellung einer beispielhaften Ausführungsform eines Verfahrens zur Erzeugung einer virtuellen Geometrie;
- Figur 2:: eine schematische Darstellung einer beispielhaften Ausführungsform eines Systems zur Datenverarbeitung;
- Figur 3:: eine schematische Darstellung der Informationsflüsse in einem System zur Datenverarbeitung;
- Figur 4:: eine weitere schematische Darstellung der Informationsflüsse in einem System zur Datenverarbeitung; und
- Figur 5:: eine schematische Darstellung einer beispielhaften Ausführungsform eines Fertigungssystems.

In den Figuren sind gleiche oder im Wesentlichen funktionsgleiche beziehungsweise -ähnliche Elemente mit den gleichen Bezugszeichen bezeichnet.

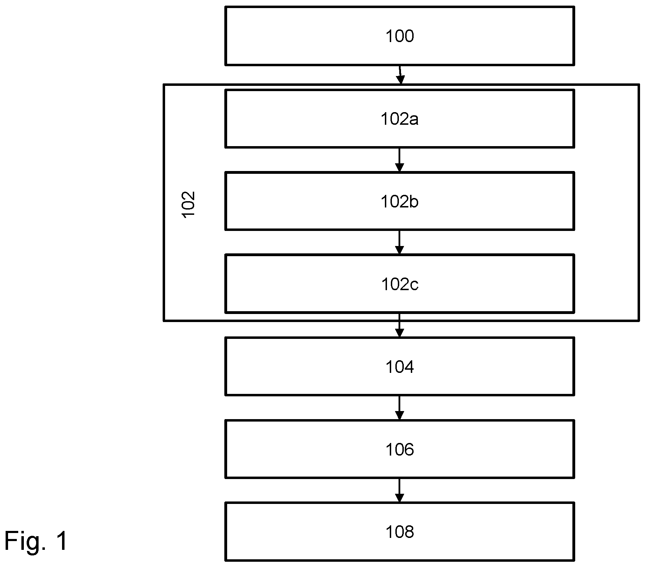

Figur 1 zeigt ein schematisches Verfahren. In Schritt 100 werden Maschineninformationen 12, 14 erfasst, die mindestens einen die Geometrie des Bauteils 8 beeinflussenden Maschinenparameter der Bearbeitungsmaschine 3 charakterisieren. Die Maschineninformation kann beispielsweise Achspositionen 12 und/oder Leistungswerte 14 mindestens einer Maschinenachse x, y, z, a, b, c charakterisieren.

In Schritt 102 wird mindestens ein Bauteilfaktor 30 ermittelt, basierend auf den Maschineninformationen 12, 14 und der Sollgeometrie 10 des hergestellten und/oder herzustellenden Bauteils 8. Schritt 102 unterteilt sich in die Schritte 102a, 102b und 102c. In Schritt 102a wird ein Verlagerungsfaktor 26 ermittelt. Hierfür wird zunächst eine Prozesskraft 22 mittels der Leistungswerte 14 und eines Kontaktbereichs 20 zwischen einem eingesetzten Werkzeug 6 und dem Bauteil 8 ermittelt. Anschließend wird der Verlagerungsfaktor 26 auf Grundlage einer Werkzeugverlagerung 26a und/oder einer Bauteilverlagerung 26b ermittelt, wobei die Werkzeugverlagerung 26a und/oder die Bauteilverlagerung 26b auf Grundlage der Prozesskraft 22 ermittelt wird.

In Schritt 102b wird der Positionsfaktor 28 ermittelt, basierend auf den Achspositionen 12. In Schritt 102c wird ein Werkzeugfaktor 24 auf Basis einer Werkzeuggeometrie ermittelt. Die Schritte 102a, 102b und 102c können in beliebiger Reihenfolge durchgeführt werden, beispielsweise auch parallel. Ferner kann der Schritt 102 mit nur einem oder zwei der Schritte 102a-c durchgeführt werden. Der Bauteilfaktor 30 wird basierend auf dem Verlagerungsfaktor 26, dem Positionsfaktor 28 und dem Werkzeugfaktor 24 ermittelt.

In Schritt 104 wird eine erste virtuelle Geometrie 32 als digitales geometrisches Abbild des hergestellten und/oder herzustellenden Bauteils 8, basierend auf dem Bauteilfaktor 30 erzeugt. In Schritt 106 wird ein modifizierter Bauteilfaktor, basierend auf den Maschineninformationen 12, 14 und der ersten virtuellen Geometrie 32 ermittelt. In Schritt 108 wird eine zweite virtuelle Geometrie, basierend auf dem modifizierten Bauteilfaktor erzeugt Vorzugsweise wird hierfür ein modifizierter Verlagerungsfaktor 26' und/oder ein modifizierter Werkzeugfaktor 24' auf Basis der ersten virtuellen Geometrie 32 ermittelt, wobei grundsätzlich das gleiche Vorgehen wie in den Schritten 102a-c anwendbar ist.

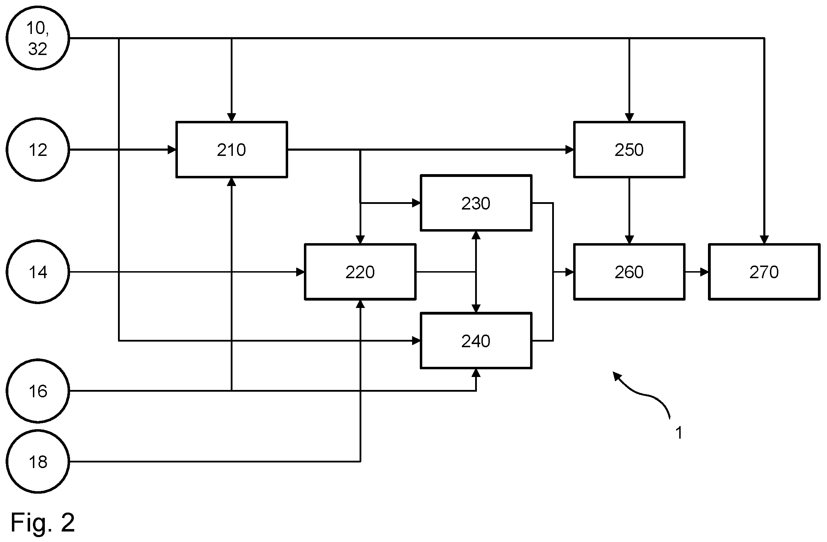

Das in Figur 2 gezeigte System zur Datenverarbeitung 1 nutzt als Eingangsinformationen die Informationen 10, charakterisierend die Sollgeometrie, die Informationen 12, charakterisierend die Achspositionen, die Informationen 14, charakterisierend Leistungswerte, die Metainformationen 16 und die Sensorinformationen 18. Das System 1 umfasst Mittel 210 zur Ermittlung des Kontaktbereichs 20 auf Grundlage der Sollgeometrie 10, der Achspositionen 12 und von Metainformationen 16. Das System 1 umfasst ferner Mittel 220 zur Ermittlung der Prozesskraft 22 auf Grundlage des Kontaktbereichs 20, der Informationen 14 und der Sensorinformationen. Darüber hinaus weist das System 1 Mittel 230 zur Ermittlung des Werkzeugfaktors 24 auf Grundlage der Prozesskraft 22 und des Kontaktbereichs 20 auf.

Des Weiteren umfasst das System 1 Mittel 240 zur Ermittlung des Verlagerungsfaktors 26 auf Basis einer Werkzeug- und/oder Bauteilverlagerung 26a,b. Die Werkzeug- und/oder Bauteilverlagerung 26a,b wird auf Grundlage von Metainformationen 16, der Sollgeometrie 10 und der Prozesskraft 22 ermittelt.

Ferner umfasst das System 1 Mittel 250 zur Ermittlung des Positionsfaktors 28 auf Grundlage des Kontaktbereichs 20 und der Sollgeometrie 10. Die Mittel 260 sind zur Erzeugung der ersten virtuellen Geometrie 32 eingerichtet, wobei die erste virtuelle Geometrie 32 auf Grundlage des Werkzeugfaktors 24, des Verlagerungsfaktors 26 und des Positionsfaktors 28 erzeugt wird. Darüber hinaus umfasst das System 1 Mittel 270 zur Ermittlung einer Geometrieabweichung 34 auf Grundlage der ersten virtuellen Geometrie 32 und der Sollgeometrie 10.

Als Eingangsgröße für das System 1 kann auch die erste virtuelle Geometrie 32 verwendet wird. Dies stellt insbesondere eine Iterationsschleife dar, wie sie im Folgenden näher erläutert wird. Auf Basis der virtuellen Geometrie 32 können die Informationen 20-34 mit den Mittel 210 - 270 mit einer höheren Genauigkeit ermittelt werden, sodass eine resultierende zweite virtuelle Geometrie 36 das hergestellte oder herzustellende Bauteil 8 mit einer höheren Genauigkeit wiedergibt.

Die Sensorinformationen 18 können zusätzlich von den Mitteln 220, 230, 240, 250 verwendet werden, um die einzelnen Ermittlungen mit einer höheren Präzision durchführen zu können.

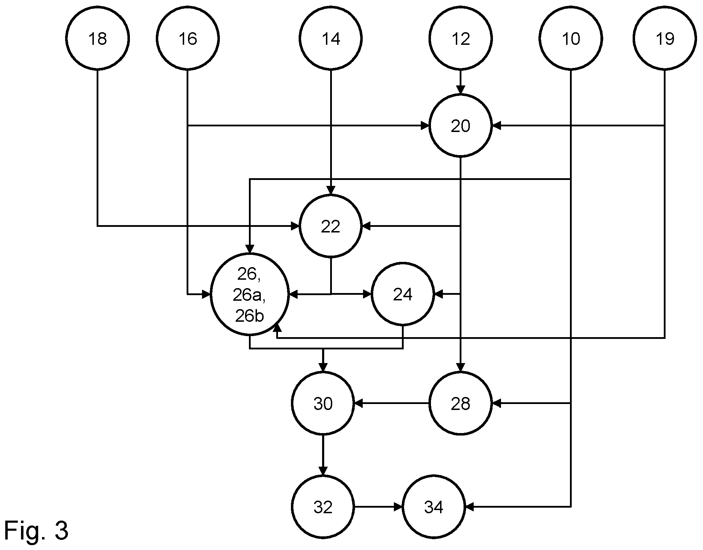

In Figur 3 sind diese Zusammenhänge auf Informationsebene dargestellt. Insbesondere ist gezeigt, dass der Verlagerungsfaktor 26 auf Grundlage einer Werkzeugverlagerung 26a und einer Bauteilverlagerung 26b ermittelt wird. Ergänzend kann eine Ausgangsgeometrie 19 des Werkstücks berücksichtigt werden. Insbesondere ist es bevorzugt, dass die Ausgansgeometrie 19 bei der Ermittlung des Kontaktbereiches 20 und bei der Ermittlung des Verlagerungsfaktors 26 berücksichtigt wird.

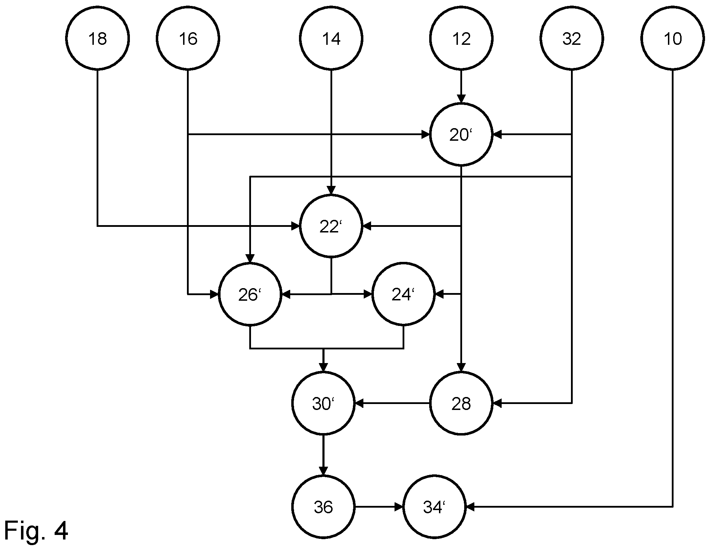

In Figur 4 ist das Verfahren zur Erzeugung einer zweiten virtuellen Geometrie 36 gezeigt. Anstatt der Sollgeometrie 10 als Eingangsgröße wird hier die erste virtuelle Geometrie 32 als Eingangsgröße verwendet, Auf Basis der Informationen 10, 12, 14, 16, 32 wird ein modifizierter Kontaktbereich 20', eine modifizierte Prozesskraft 22', ein modifizierter Werkzeugfaktor 24' und ein modifizierter Verlagerungsfaktor 26' ermittelt,

Auf Grundlage des modifizierten Werkzeugfaktors 24', des modifizierten Verlagerungsfaktors 26' und des Positionsfaktors 28 wird der modifizierte Bauteilfaktor 30' ermittelt. Auf Grundlage des modifizierten Bauteilfaktors 30' wird die zweite virtuelle Geometrie 36 ermittelt. Auf Grundlage der zweiten virtuellen Geometrie 36 und der Sollgeometrie 10 wird eine modifizierte Bauteilabweichung 34' ermittelt.

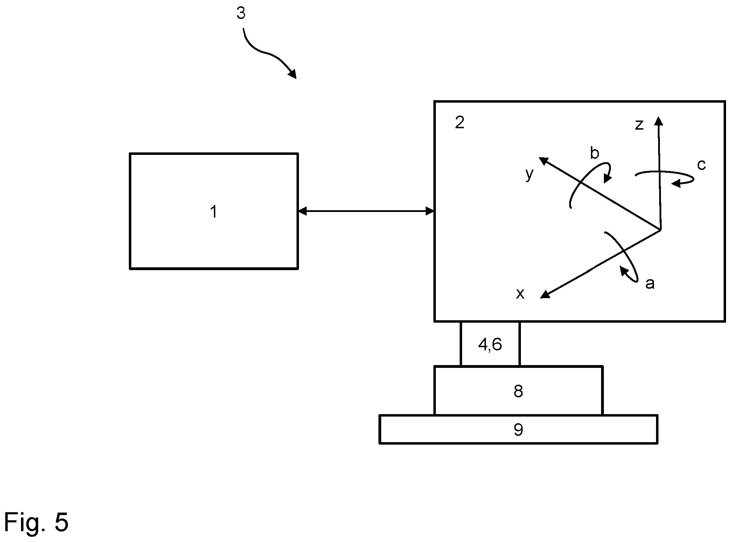

Figur 5 zeigt ein Fertigungssystem 3 mit einer Bearbeitungsmaschine 2 und einem System zur Datenverarbeitung 1. Die Bearbeitungsmaschine 2 weist eine Maschinenspindel 4 zum rotatorischen Antreiben eines Werkzeugs 6 auf. Mit dem Werkzeug 6 wird das Bauteil 8 hergestellt, das mit einem Spannmittel 9 gespannt ist. Die Bearbeitungsmaschine 2 weist drei Linearachsen x, y, z auf. Darüber hinaus weist die Bearbeitungsmaschine 2 eine erste Schwenkachse a, eine zweite Schwenkachse b und eine dritte Schwenkachse c auf. Die Bearbeitungsmaschine 2 ist mit dem System zur Datenverarbeitung 1 signaltechnisch gekoppelt.

Durch die Kopplung kann in-situ eine erste virtuelle Geometrie 32 als digitales geometrisches Abbild des hergestellten Bauteils 8 erzeugt werden. Hierfür wird ein Bauteilfaktor 30, basierend auf Maschineninformationen, insbesondere den Achspositionen 12 und den Leistungswerten 14 der Bearbeitungsmaschine 2, und der Sollgeometrie ermittelt. Die Maschineninformationen 12, 14 werden erfasst, beispielsweise aus einer Maschinensteuerung der Bearbeitungsmaschine 2 ausgelesen Die Abbildungsgenauigkeit, also der Unterschied zwischen dem hergestellten Bauteil und der virtuellen Geometrie kann durch Iterationsschleiferi erhöht werden. Hierfür wird bzw. werden beispielsweise eine zweite virtuelle Geometrie 36 und/oder eine dritte virtuelle Geometrie und/oder weitere virtuelle Geometrien erzeugt.

Durch das im Vorherigen beschriebene Verfahren und das im Vorherigen beschriebene System 1 können Messverfahren aus der Fertigungsprozesskette eliminiert werden, Grundlage hierfür ist, dass die Geometrie eines hergestellten Bauteils 8 nicht auf Basis eines Messverfahrens, sondern auf Basis von Maschineninformationen 12, 14 und der vorgegebenen Sollgeometrie 10 ermittelt wird. Hierdurch kann eine 100 %-Kontrolle der hergestellten Bauteile 8 erfolgen, sodass Ausschuss reduziert wird.

Darüber hinaus werden die Kosten der Prozesskette für komplexe Bauteile reduziert, da die eingangs genannten 25 % der Bauteilkosten für Messverfahren beseitigt werden. Darüber hinaus kann das Verfahren auch vollständig virtuell ablaufen, sodass eine Anpassung des NC-Codes auf Basis der ersten virtuellen Geometrie oder der zweiten virtuellen Geometrie erfolgen kann. Die Grundlage hierfür ist, dass die Prozesskraft 22 auch berechnet werden kann.

Somit wird ein robustes Verfahren bereitgestellt, um die Qualität von Bauteilen 8 einerseits prognostizieren und andererseits kontrollieren zu können.

### BEZUGSZEICHEN

- 1: System zur Datenverarbeitung
- 2: Bearbeitungsmaschine
- 3: Fertigungssystem
- 4: Maschinenspindel
- 6: Werkzeug
- 8: Bauteil
- 9: Spannmittel
- 10: Informationen charakterisierend Sollgeometrie
- 12: Informationen charakterisierend Achspositionen
- 14: Informationen charakterisierend Leistungswerte
- 16: Metainformationen
- 18: Sensorinformationen
- 19: Ausgangsgeometrie
- 20: Informationen charakterisierend den Kontaktbereich
- 20': Informationen charakterisierend den modifizierten Kontaktbereich
- 22: Informationen charakterisierend die Prozesskraft
- 22': Informationen charakterisierend die modifizierte Prozesskraft
- 24: Informationen charakterisierend den Werkzeugfaktor
- 24': Informationen charakterisierend den modifizierten Werkzeugfaktor
- 26: Informationen charakterisierend den Verlagerungsfaktor
- 26': Informationen charakterisierend den modifizierten Verlagerungsfaktor
- 26a: Werkzeugverlagerung
- 26b: Bauteilverlagerung
- 28: Informationen charakterisierend Positionsfaktor
- 30: Informationen charakterisierend den Bauteilfaktor
- 30': Informationen charakterisierend den modifizierten Bauteilfaktor
- 32: Informationen charakterisierend die erste virtuelle Geometrie
- 34: Informationen charakterisierend eine Bauteilabweichung
- 34': Informationen charakterisierend eine modifizierte Bauteilabweichung
- 36: Informationen charakterisierend die zweite virtuelle Geometrie
- 100-108: Verfahrensschritte
- 210: Mittel zur Ermittlung des Kontaktbereichs
- 220: Mittel zur Ermittlung der Prozesskraft
- 230: Mittel zur Ermittlung des Werkzeugfaktors
- 240: Mittel zur Ermittlung des Verlagerungsfaktors
- 250: Mittel zur Ermittlung des Positionsfaktors
- 260: Mittel zur Erzeugung der ersten virtuellen Geometrie
- 270: Mittel zur Ermittlung einer Geometrieabweichung
- a: Maschinenachse
- b: Maschinenachse
- c: Maschinenachse
- x: Maschinenachse
- y: Maschinenachse
- z: Maschinenachse

## Patentansprüche

1. Computerimplementiertes Verfahren zur Erzeugung einer virtuellen Geometrie eines mit einer Bearbeitungsmaschine (2) hergestellten und/oder herzustellenden Bauteils (8) mit einer Sollgeometrie, umfassend die Schritte:
- Erfassen von Maschineninformationen (12, 14), die mindestens einen eine Geometrie des Bauteils (8) beeinflussenden Maschinenparameter der Bearbeitungsmaschine (2) charakterisieren,
- Ermitteln mindestens eines Bauteilfaktors (30) basierend auf den Maschineninformationen (12, 14) und der Sollgeometrie (10), und
- Erzeugen einer ersten virtuellen Geometrie (32) als digitales geometrisches Abbild des hergestellten und/oder herzustellenden Bauteils (8) basierend auf dem Bauteilfaktor (30).

2. Verfahren nach dem vorherigen Anspruch, wobei die Maschineninformationen Achspositionen (12) mindestens einer Maschinenachse (x, y, z, a, b, c), vorzugsweise von zwei oder mehr oder allen Maschinenachsen, und/oder einer Maschinenspindel (4) der Bearbeitungsmaschine (2) charakterisieren.

3. Verfahren nach dem vorherigen Anspruch 2, wobei die Maschineninformationen Leistungswerte (14) der mindestens einen Maschinenachse (x, y, z, a, b, c), vorzugsweise der zwei oder mehr oder von allen Maschinenachsen, und/oder der Maschinenspindel der Bearbeitungsmaschine (2) charakterisieren.

4. Verfahren nach dem vorherigen Anspruch 3, umfassend die Schritte:
- Ermitteln einer Prozesskraft (22) mittels der Leistungswerte (14) und eines Kontaktbereichs (20) zwischen einem eingesetzten Werkzeug (6) und dem Bauteil (8), und
- Ermitteln eines Verlagerungsfaktors (26), der mittels einer Werkzeugverlagerung (26a) und/oder einer Bauteilverlagerung (26b) auf Grundlage der Prozesskraft (22) ermittelt wird,
- wobei der Bauteilfaktor (30) basierend auf dem Verlagerungsfaktor (26) ermittelt wird.

5. Verfahren nach einem der vorherigen Ansprüche 2-4, umfassend den Schritt:
- Ermitteln eines Positionsfaktors (28) auf Basis der Achspositionen (12), und
- wobei der Bauteilfaktor (30) basierend auf dem Positionsfaktor (28) ermittelt wird.

6. Verfahren nach einem der vorherigen Ansprüche, umfassend den Schritt:
- Ermitteln eines Werkzeugfaktors (24) auf Basis einer Werkzeuggeometrie, und
- wobei der Bauteilfaktor (30) basierend auf dem Werkzeugfaktor (24) ermittelt wird.

7. Verfahren nach dem vorherigen Anspruch 6, wobei
- die Werkzeuggeometrie auf Basis eines Ausgangszustands und/oder auf Basis eines Werkzeugverschleißes ermittelt wird, und
- vorzugsweise der Werkzeugverschleiß basierend auf dem Kontaktbereich und/oder basierend auf der Prozesskraft ermittelt wird.

8. Verfahren nach einem der vorherigen Ansprüche 4-7, umfassend den Schritt:
- Erfassung von Metainformationen (16), wobei die Metainformationen Werkzeugparameter des Werkzeugs, eine Maschinenkinematik der Bearbeitungsmaschine und/oder Programmnamen repräsentieren, und
- wobei die Metainformationen zum Ermitteln des Verlagerungsfaktors und/oder zum Ermitteln des Kontaktbereichs verwendet werden.

9. Verfahren nach einem der vorherigen Ansprüche 4-8, umfassend den Schritt:
- Erfassung von Sensorinformationen (18), wobei die Sensorinformationen Kraftwerte, Vibrationswerte und/oder Werkzeugverlagerungswerte charakterisieren, und
- wobei die Sensorinformationen zum Ermitteln der Prozesskraft verwendet werden.

10. Verfahren nach einem der vorherigen Ansprüche 6-9, wobei der Kontaktbereich basierend auf der Werkzeuggeometrie des Werkzeugs und der Sollgeometrie des Bauteils und/oder der ersten virtuellen Geometrie ermittelt wird.

11. Verfahren nach einem der vorherigen Ansprüche, umfassend die Schritte:
- Ermitteln eines modifizierten Bauteilfaktors basierend auf den Maschineninformationen (12, 14) und der ersten virtuellen Geometrie, und
- Erzeugen einer zweiten virtuellen Geometrie basierend auf dem modifizierten Bauteilfaktor,
- wobei vorzugsweise ein modifizierter Verlagerungsfaktor, ein modifizierter Positionsfaktor und/oder ein modifizierter Werkzeugfaktor auf Basis der ersten virtuellen Geometrie und/oder auf Basis einer Abweichung zwischen der ersten virtuellen Geometrie und der Sollgeometrie ermittelt wird.

12. Verfahren nach einem der vorherigen Ansprüche, umfassend den Schritt:
- Ermitteln einer Geometrieabweichung durch Abgleich der ersten virtuellen Geometrie und/oder der zweiten virtuellen Geometrie mit der Sollgeometrie,
- wobei vorzugsweise in vordefinierten Bauteilabschnitten der Sollgeometrie jeweils ein Abweichungsvektor gebildet wird.

13. Verfahren zur Erzeugung eines digitalen Zwillings eines hergestellten Bauteils basierend auf Maschineninformationen und einer Sollgeometrie des Bauteils mittels eines Verfahrens nach einem der vorherigen Ansprüche 1-12.

14. System (1) zur Datenverarbeitung, umfassend Mittel (210-270) zur Ausführung der Schritte des Verfahrens nach einem der vorherigen Ansprüche 1-13.

15. Computerprogramm, umfassend Befehle, die bei der Ausführung des Computerprogramms durch einen Computer diesen veranlassen, das Verfahren nach einem der vorherigen Ansprüche 1-13 auszuführen.

## Claims

1. Computer-implemented method for generating a virtual geometry of a component (8) which is produced and/or is to be produced with a processing machine (2) and has a nominal geometry, comprising the steps:
- acquiring machine information (12, 14) which characterizes at least one machine parameter of the processing machine (2) which influences a geometry of the component (8),
- determining at least one component factor (30) based on the machine information (12, 14) and the nominal geometry (10), and
- generating a first virtual geometry (32) as a digital geometric image of the component (8) produced and/or to be produced based on the component factor (30).

2. Method according to the preceding claim, wherein the machine information characterizes axis positions (12) of at least one machine axis (x, y, z, a, b, c), preferably of two or more or all machine axes, and/or a machine spindle (4) of the processing machine (2).

3. Method according to the preceding claim 2, wherein the machine information characterizes power values (14) of the at least one machine axis (x, y, z, a, b, c), preferably of the two or more or of all machine axes, and/or of the machine spindle of the processing machine (2).

4. Method according to the preceding claim 3, comprising the steps:
- determining a process force (22) by means of the power values (14) and a contact area (20) between an applied tool (6) and the component (8), and
- determining a displacement factor (26) determined by means of a tool displacement (26a) and/or a component displacement (26b) based on the process force (22),
- wherein the component factor (30) is determined based on the displacement factor (26).

5. Method according to any one of the preceding claims 2-4, comprising the step of:
- determining a position factor (28) based on the axis positions (12), and
- wherein the component factor (30) is determined based on the position factor (28).

6. Method according to any one of the preceding claims, comprising the step of:
- determining a tool factor (24) based on a tool geometry, and
- wherein the component factor (30) is determined based on the tool factor (24).

7. Method according to the preceding claim 6, wherein
- the tool geometry is determined on the basis of an initial condition and/or on the basis of a tool wear, and
- preferably the tool wear is determined based on the contact area and/or based on the process force.

8. Method according to any one of the preceding claims 4-7, comprising the step:
- acquiring metainformation (16), wherein the metainformation represents tool parameters of the tool, machine kinematics of the processing machine and/or program names, and
- wherein the metainformation is used to determine the displacement factor and/or to determine the contact area.

9. Method according to any one of the preceding claims 4-8, comprising the step of:
- acquiring sensor information (18), wherein the sensor information characterizes force values, vibration values, and/or tool displacement values; and
- wherein the sensor information is used to determine the process force.

10. Method according to any of the preceding claims 6-9, wherein the contact area is determined based on the tool geometry of the tool and the nominal geometry of the component and/or the first virtual geometry.

11. Method according to any one of the preceding claims, comprising the steps:
- determining a modified component factor based on the machine information (12, 14) and the first virtual geometry; and
- generating a second virtual geometry based on the modified component factor,
- preferably determining a modified displacement factor, a modified position factor and/or a modified tool factor based on the first virtual geometry and/or based on a deviation between the first virtual geometry and the nominal geometry.

12. Method according to any one of the preceding claims, comprising the step of:
- determining a geometry deviation by matching the first virtual geometry and/or the second virtual geometry with the nominal geometry,
- preferably generating a deviation vector in predefined component sections of the nominal geometry in each case.

13. Method for generating a digital twin of a produced component based on machine information and a nominal geometry of the component by means of a method according to any one of the preceding claims 1-12.

14. Data processing system (1) comprising means (210-270) for carrying out the steps of the method according to any one of the preceding claims 1-13.

15. Computer program comprising instructions which, when the computer program is executed by a computer, cause the computer program to execute the method according to any one of the preceding claims 1-13.

## Revendications

1. Procédé mis en œuvre par ordinateur pour générer une géométrie virtuelle d'un composant (8) qui est produit et/ou doit être produit à l'aide d'une machine d'usinage (2) et qui présente une géométrie nominale, comprenant les étapes suivantes :
- acquisition d'informations machine (12, 14) qui caractérisent au moins un paramètre machine de la machine d'usinage (2) qui influence la géométrie du composant (8),
- déterminer au moins un facteur de composant (30) sur la base des informations de machine (12, 14) et de la géométrie nominale (10), et
- générer une première géométrie virtuelle (32) en tant qu'image géométrique numérique du composant (8) produit et/ou à produire sur la base du facteur de composant (30).

2. Procédé selon la revendication précédente, dans lequel les informations de la machine caractérisent les positions des axes (12) d'au moins un axe de la machine (x, y, z, a, b, c), de préférence de deux ou plusieurs axes de la machine ou de tous les axes de la machine, et/ou d'une broche (4) de la machine d'usinage (2).

3. Procédé selon la revendication 2 précédente, dans lequel les informations de la machine caractérisent les valeurs de puissance (14) d'au moins un axe de la machine (x, y, z, a, b, c), de préférence de deux ou plusieurs axes ou de tous les axes de la machine, et/ou de la broche de la machine d'usinage (2).

4. Procédé selon la revendication 3 précédente, comprenant les étapes suivantes :
- déterminer une force de processus (22) au moyen des valeurs de puissance (14) et d'une zone de contact (20) entre un outil appliqué (6) et le composant (8), et
- déterminer un facteur de déplacement (26) déterminé au moyen d'un déplacement d'outil (26a) et/ou d'un déplacement de composant (26b) sur la base de la force de processus (22),
- dans lequel le facteur de composant (30) est déterminé sur la base du facteur de déplacement (26).

5. Procédé selon l'une quelconque des revendications 2 à 4 précédentes, comprenant l'étape consistant à :
- déterminer un facteur de position (28) sur la base des positions des axes (12), et
- dans lequel le facteur de composant (30) est déterminé sur la base du facteur de position (28).

6. Procédé selon l'une quelconque des revendications précédentes, comprenant l'étape consistant à :
- déterminer un facteur d'outil (24) sur la base d'une géométrie d'outil, et
- dans lequel le facteur de composant (30) est déterminé sur la base du facteur d'outil (24).

7. Procédé selon la revendication 6 précédente, dans lequel
- la géométrie de l'outil est déterminée sur la base d'une condition initiale et/ou sur la base d'une usure de l'outil, et
- de préférence, l'usure de l'outil est déterminée sur la base de la zone de contact et/ou sur la base de la force de processus.

8. Procédé selon l'une quelconque des revendications 4 à 7 précédentes, comprenant l'étape consistant à :
- acquérir des métadonnées (16), dans lequel les métadonnées représentent les paramètres de l'outil, la cinématique de la machine d'usinage et/ou les noms de programmes, et
- dans lequel les métadonnées sont utilisées pour déterminer le facteur de déplacement et/ou pour déterminer la zone de contact.

9. Procédé selon l'une quelconque des revendications 4 à 8 précédentes, comprenant l'étape consistant à :
- acquérir des informations de capteur (18), les informations de capteur caractérisant des valeurs de force, des valeurs de vibration et/ou des valeurs de déplacement d'outil ; et
- les informations de capteur étant utilisées pour déterminer la force de processus.

10. Procédé selon l'une quelconque des revendications 6 à 9 précédentes, dans lequel la zone de contact est déterminée sur la base de la géométrie de l'outil et de la géométrie nominale du composant et/ou de la première géométrie virtuelle.

11. Procédé selon l'une quelconque des revendications précédentes, comprenant les étapes suivantes :
- déterminer un facteur de composant modifié sur la base des informations de machine (12, 14) et de la première géométrie virtuelle; et
- générer une deuxième géométrie virtuelle sur la base du facteur de composant modifié,
- déterminer de préférence un facteur de déplacement modifié, un facteur de position modifié et/ou un facteur d'outil modifié sur la base de la première géométrie virtuelle et/ou sur la base d'un écart entre la première géométrie virtuelle et la géométrie nominale.

12. Procédé selon l'une quelconque des revendications précédentes, comprenant l'étape consistant à :
- déterminer un écart de géométrie en faisant correspondre la première géométrie virtuelle et/ou la deuxième géométrie virtuelle avec la géométrie nominale,
- de préférence générer un vecteur d'écart dans des sections de composant prédéfinies de la géométrie nominale dans chaque cas.

13. Procédé pour générer un jumeau numérique d'un composant produit sur la base d'informations machine et d'une géométrie nominale du composant au moyen d'un procédé selon l'une quelconque des revendications 1 à 12 précédentes.

14. Système de traitement de données (1) comprenant des moyens (210-270) pour exécuter les étapes du procédé selon l'une quelconque des revendications 1 à 13 précédentes.

15. Programme informatique comprenant des instructions qui, lorsque le programme informatique est exécuté par un ordinateur, amènent le programme informatique à exécuter le procédé selon l'une quelconque des revendications 1 à 13 précédentes.
